# EUROPEAN PATENT SPECIFICATION

(11) **EP 2 507 699 B1**
(45) Date of publication and mention of the grant of the patent: **27.09.2017**
(21) Application number: 10835121.4
(22) Date of filing: 02.12.2010
(51) Int. Cl.: G06F 3/048, G08C 23/04, G08C 17/02

(54) **SYSTEM AND METHOD FOR CONFIGURATION OF CONTROLLING DEVICE FUNCTIONALITY**
SYSTEM UND VERFAHREN ZUR KONFIGURATION DER STEUERUNG VON GERÄTEFUNKTIONEN
SYSTÈME ET PROCÉDÉ DE CONFIGURATION DE LA FONCTIONNALITÉ D'UN DISPOSITIF DE COMMANDE

(30) Priority: 02.12.2009 US 266014 P; 30.11.2010 US 956154
(43) Date of publication of application: 10.10.2012
(73) Proprietor: Universal Electronics, Inc., Santa Ana, CA 92707 (US)
(72) Inventor: HATAMBEIKI, Arsham, Irvine California 92612 (US); TRUONG, Brian, Alex, Cerritos California 90703 (US); YUH, Han-Sheng, Diamond Bar California 91765 (US)
(74) Representative: Cordina, Kevin John
(86) International application number: PCT/US2010/058725
(87) International publication number: WO 2011/068966

(56) References cited:
- WO-A1-00/39772
- WO-A1-2008/086306
- US-A1- 2006 050 142
- US-A1- 2009 138 907
- US-A1- 2009 249 359
- US-B1- 6 211 870

## Description

### RELATED APPLICATION INFORMATION

This application claims the benefit of U.S. Provisional Patent Application No. 61/266,014, filed on December 2, 2009.

This application also claims the benefit of and is a continuation-in-part of U.S. Application No. 12/629,423, filed June 24 2009, which in turn is a continuation-in-part of U.S. Application 11/357,681, filed February 16, 2006, which in turn is a continuation-in-part of U.S. Application 11/218,900 (now U.S. Patent 7,266,777), filed on September 2, 2005, which in turn claims the benefit of U.S. Provisional Patent Application Nos. 60/608,183, filed on September 8, 2004, and 60/705,926, filed on August 5, 2005.

### BACKGROUND

The following relates generally to controlling devices and, more particularly, to a configurable controlling device having an associated editor program for use in configuring, among other things, the user interface and functionality of the controlling device.

Editor programs for configuring a controlling device, such as a hand held remote control, are known in the art. For example, U.S. Patent No. 6,211,870 illustrates and describes a controlling device which is programmable from a PC using an advanced, object-oriented user interface. More particularly, multiple user selectable screen objects may be created on the PC and transferred to the controlling device. The screen objects include screen layout and descriptions of soft keys to be displayed on a graphic display of the controlling device, as well as commands associated with the screen object, the soft keys and/or programmable keys on the remote control unit. The user may then select any of the screen objects once they have been transferred to the controlling device to control the operation of various appliances.

Similarly, PCT published application no. WO 00/39772 discloses a universal, programmable remote control device which has programming that enables an end-user to customize the remote control device through editing or programming of the control functionalities of the remote control device. The programming is achieved via a PC. In this manner, the control configuration created via an editor on the PC can be downloaded into the device. It is additionally disclosed that the PC has emulator software to test the configuration before downloading. It is to be understood that WO 00/39772 generally discloses the editor for the Philips' "Pronto" brand remote control.

Increasingly, such programmable controlling devices are utilized in applications which require adaptable functionality, i.e., an ability to dynamically modify the actions performed in response to user input based on variable parameters such as time, existing state of an appliance, previous action performed, etc., especially in environments which include networked and/or interactive appliances. While some known controlling devices and associated editor programs do provide limited methods for supporting such adaptable functionality, such programming of these controlling devices is tedious and error-prone.

WO 2008/086306 A1 discloses creating web-clip widgets on a portable multifunction device.

US 6,211,870 B1 discloses a computer programmable remote control. Multiple user selectable screen objects may be created from a general purpose computer and transferred to the remote control unit.

WO 00/39772 A1 discloses a fully functional remote control editor and emulator.

US 2006/050142 A1 discloses a configurable controlling device having an associated editing program.

### SUMMARY

The following generally discloses an editor program for use in configuring a user interface of a controlling device, together with a configurable controlling device such as a hand-held remote control unit. The editor program allows a user to create on a personal computer for downloading to the controlling device a graphical user interface comprised of user interface pages having icons which icons, when activated on the controlling device, cause the controlling device to perform a function or series of functions, such as to transmit a command to an appliance, to change the user interface display, etc. The editor program provides, among other things, for selection and placement of icons onto user interface display pages, assignment of commands to function keys (both iconic and hard keys), assignment of backgrounds to user interface pages or groups of pages, creation of icon-activated, user-defined command sequences, pre-rendering of user interface pages prior to downloading of the user interface to the controlling device, etc. Advantageously, in an exemplary embodiment the user interface editor and the operating software of the controlling device may also support the definition and editing of n-state widgets, which are unitary GUI objects comprising one or more touch activated areas together with one or more display graphics (not necessarily in a one-for-one relationship) and which are capable of both initiating parameterized command functions in response to user or system inputs, as well as receiving and acting upon status responses or other data received from target appliances. The editor program may include features to facilitate flexible definition of the exact behavior, appearance, and functionality of such widget objects.

The various advantages, features, properties and relationships of this improved user interface editor and controlling device system will be obtained from the following detailed description and accompanying drawings which set forth illustrative embodiments which are indicative of the various ways in which the principles thereof may be employed.

### BRIEF DESCRIPTION OF THE DRAWINGS

For use in better understanding the user interface editor and configuration system and related methods described hereinafter reference may be had to the following drawings in which:
Figure 1 illustrates an exemplary home entertainment system in which the exemplary controlling devices may be utilized;
Figure 2 illustrates a block diagram of components of an exemplary controlling device;
Figures 3a and 3b illustrate exemplary editing systems which may be used to configure and download a controlling device configuration, including a user interface, to an exemplary controlling device;
Figure 4 illustrates an exemplary home page graphical user interface ("GUI") for a touch screen of a controlling device;
Figure 5 illustrates an exemplary device selection page GUI for the touch screen of a controlling device;
Figure 6 illustrates an exemplary device control page GUI for the touch screen of a controlling device;
Figure 7 illustrates another exemplary device control page GUI for the touch screen of a controlling device;
Figure 8 illustrates yet another exemplary device control page GUI for the touch screen of a controlling device;
Figure 9 illustrates an exemplary PC-based editor which may be used to create the appearance and functionality of the exemplary GUI of Figure 4;
Figure 10 illustrates an exemplary group of programming blocks which may be used in the definition of widgets;
Figures 11a and 11b illustrate the use of the programming blocks of Figure 10 in a PC-based editor to create an exemplary widget;
Figure 12 illustrates the use of the programming blocks of Figure 10 in a PC-based editor to create a second exemplary widget;
Figures 13 and 14 illustrate the placement of the widget of Figures 11a and 11b into an exemplary control page GUI; and
Figure 15 illustrates the subsequent execution and appearance of the control pages and widget programming after download into a controlling device.

### DETAILED DESCRIPTION

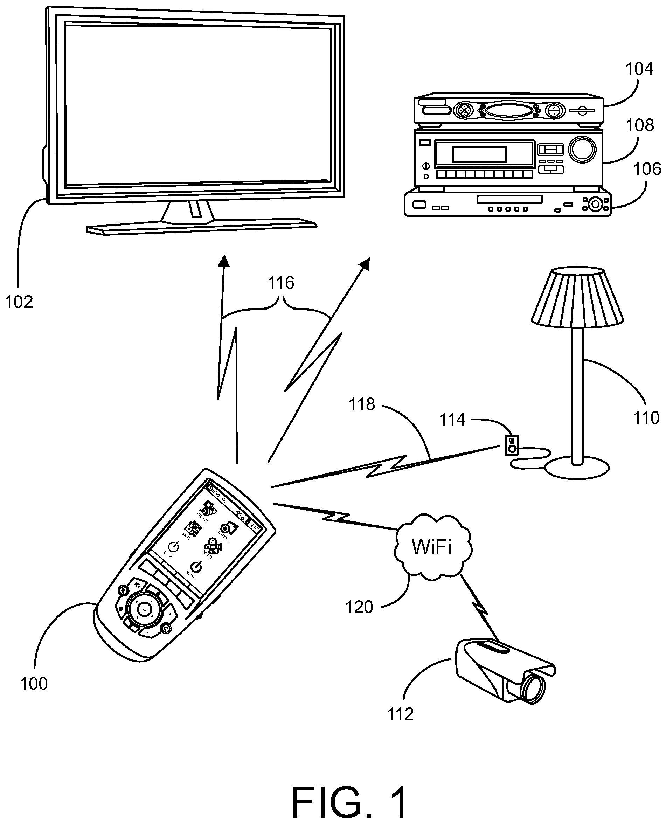

The following discloses a controlling device having a face panel on which is carried a user interface activatable to cause transmission of at least one command to at least one appliance. Turning now to the figures, wherein like reference numerals refer to like elements, Fig. 1 illustrates an exemplary system including controllable appliances, such as a set top box ("STB") 104, a DVD player 106, an audio amplifier/receiver 108, a television 102, a lighting fixture 110 with associated multilevel dimmer 114, and a surveillance camera 112 as well as a controlling device 100. The controlling device 100 is capable of transmitting commands to the appliances, using any convenient IR or RF, point-to-point or networked, protocol to cause the appliances to perform operational functions. By way of illustration without limitation, the controlling device of Figure 1 may utilize uni- or bi-directional IR signaling 116, proprietary RF signaling 118 (e.g., Zwave), and/or standardized RF network signaling 120 (e.g., WiFi or Bluetooth) to communicate with the various target appliances. While illustrated in the context of a STB 104 with DVD player 106, audio system 108, television 102, lighting fixture 110 and camera 112 it is to be understood that controllable appliances can include, but are not limited to, televisions, VCRs, DVRs, DVD players, cable or satellite converter set-top boxes (STBs), amplifiers, media streaming devices, CD players, game consoles, home lighting, drapery controls, fans, HVAC systems, thermostats, door locks, security systems, personal computers, etc., and, as such, the instant exemplary disclosures are not intended to be limiting as to type or quantity of controllable appliances or equipment.

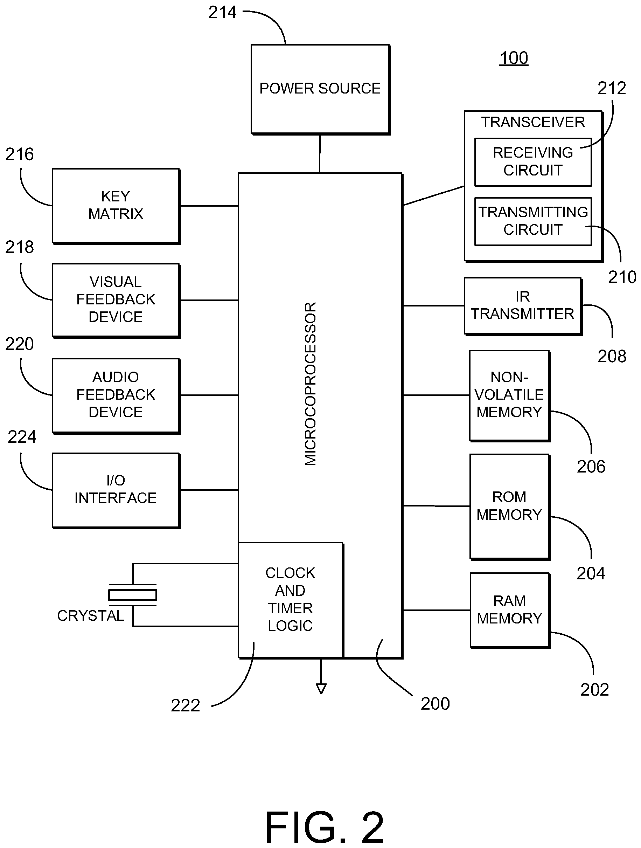

Turning now to Figure 2, for use in transmitting command codes to one or more of the appliances, the controlling device 100 of the exemplary system may include, as needed for a particular application, a processor 200 coupled to a physically embodied, non-transient memory device (such as ROM memory 204, RAM memory 202, and/or a non-volatile memory 206), a key matrix 216 (e.g., physical buttons, a touch sensitive display with soft keys, or a combination thereof), an internal clock and timer 222, an IR (and/or RF) transmitter 208 for directly issuing commands to controlled appliances, one or more RF (and/or IR) wireless transmission and reception circuit(s) 210, 212 for issuing commands to controlled appliances via a network and/or transferring data or commands between the controlling device and other networked controlling devices or external computing devices such as a PC, a physical input/output interface 224 (e.g., USB interface) for use in directly transferring data between the controlling device and an external computing devices such as a PC, STB, etc., a means 218 to provide visual feedback to the user (e.g., LCD display or the like, which may underlay all or part of a touch sensitive portion of key matrix 216), a means 220 to provide audio feedback (speaker, buzzer, etc.) and a power supply 214 all as generally illustrated in Fig. 2. As will be understood by those of skill in the art, the memory device(s) may include executable instructions that are intended to be executed by the processor 200 to control the operation of the controlling device 100.

The non-volatile read/write memory 206, for example an EEPROM, battery-backed up RAM, Smart Card, memory stick, or the like, may be provided to store setup data and parameters as necessary. It is to be additionally understood that the memory devices may take the form of any type of readable media, such as, for example, ROM, RAM, SRAM, FLASH, EEPROM, Smart Card, memory stick, a chip, a hard disk, a magnetic disk, and/or an optical disk. Still further, it will be appreciated that some or all of the illustrated memory devices 202, 204, and 206 may be physically incorporated within the same IC chip as the microprocessor 200 (a so called "microcontroller") and, as such, they are shown separately in Fig. 2 only for the sake of clarity.

To cause the controlling device 100 to perform an action, the controlling device 100 is adapted to be responsive to events, such as a sensed user interaction with the key matrix 216, receipt of a data or signal transmission, etc. In response to an event appropriate instructions within the memory may be executed. For example, when a command key is activated on the controlling device 100, the controlling device 100 may retrieve a command code corresponding to the activated command key from memory 204 or 206 and transmit the command code to a device in a format recognizable by the device. It will be appreciated that the instructions within the memory can be used not only to cause the transmission of command codes and/or data to the appliances but also to perform local operations. While not limiting, other local operations that may be performed by the controlling device 100 include execution of pre-programmed macro command sequences, displaying information/data, manipulating the appearance of a graphical user interface presented on a local LCD display 218, etc. For convenience and economy of development effort, the software programming of controlling device 100 may utilize an underlying operating system such as, for example, Microsoft's "Windows CE" or "Windows Mobile" brand operating systems.

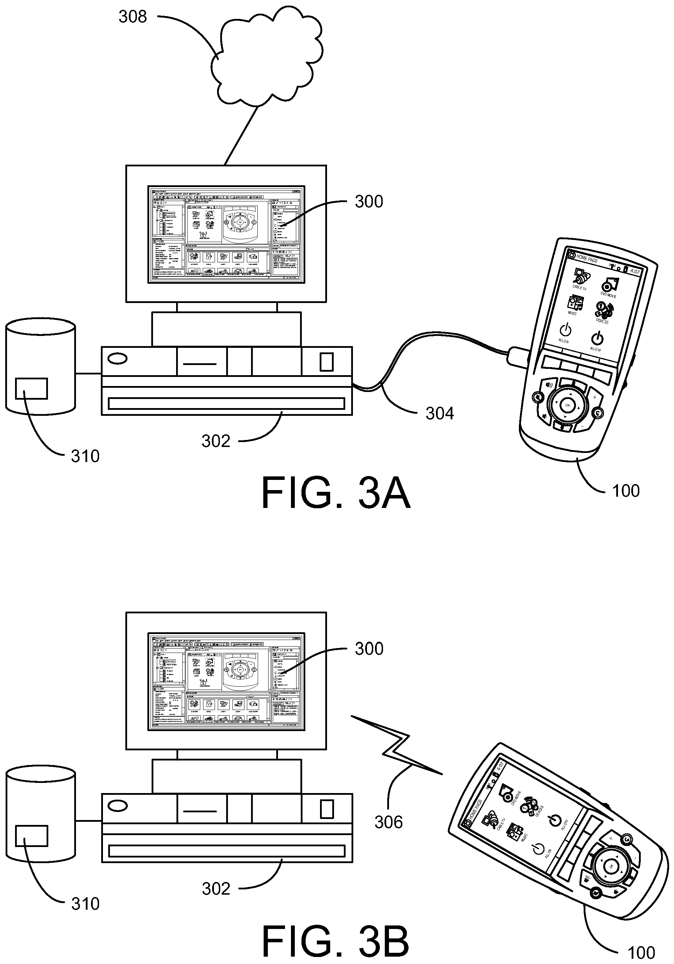

As contemplated in the above referenced and related U.S. patent applications 12/629,433, 11/357,681 and 11/218,900 and provisional applications 61/266,014, 60/201,021, 60/608,183 and 60/705,926, the graphical user interface ("GUI") and certain functionalities of controlling device 100 may be defined as a set of interrelated pages for display on the touch screen of an exemplary controlling via the use of a software based editing tool 300, i.e., computer executable instructions stored on a physically embodied, non-transient memory device, which editing tool may be provided as in the form of an application program to be installed on a PC 302 running an operating system, for example, a Microsoft "Windows" brand operating system, as generally illustrated in Figures 3a and 3b and described in further detail hereinafter. In the illustrative examples that follow, it will be appreciated by those skilled in the art that development tools such as Microsoft's Visual Studio, the C# programming language, and various third party libraries may be used to facilitate creation of the software comprising exemplary editing tool 300 and exemplary controlling device 100 GUI and functionality.

Editor application 300 may be offered by the manufacturer of the controlling device 100 on a CD ROM, for download from a Web site, etc., as appropriate for installation on a PC of the user's choice. Once the editor application is installed on the user's PC 302, the controlling device GUI may be created or revised using the editor application, stored locally in device memory as a file 310 on PC 302 and/or caused to be downloaded into controlling device 100 via a hardwired connection 304, a wireless link 306 (e.g., WiFi, Bluetooth, Zigbee, etc.) or any other convenient means. Additionally, it will be appreciated that the editor application 300, although primarily resident on the user's local PC 302, may also be adapted to access additional data items from remotely located servers via the Internet 308, from appliances linked to the PC 302 via a home network, etc. Examples of such items may include, without limitation, IR command codes (e.g., to allow for support of new appliances), data which indicates operations supported by an appliance, device model number cross-references (e.g., for entering into the controlling device for set-up purposes as disclosed in, for example, U.S. Patent No. 6,587,067), operational software updates for controlling device 100, etc. It will also be appreciated that in such an environment data may also be uploaded from PC 302 to a centralized repository, e.g., a remotely located, Internet accessible server. Such uploaded information may include, for example, current user configurations, learned IR code data, etc., and may be comprised of or derived from data stored locally on PC 302 (for example, file 310) and/or data retrieved from controlling device 100 during the times controlling device 100 is coupled to PC 302. It will also be appreciated that in alternative embodiments, all or part of the editor program itself may be resident on a Web server platform, for example in the form of ActiveX, JavaScript, etc. programming and as such the PC-based editor 300 is presented herein by way of example only, without limitation.

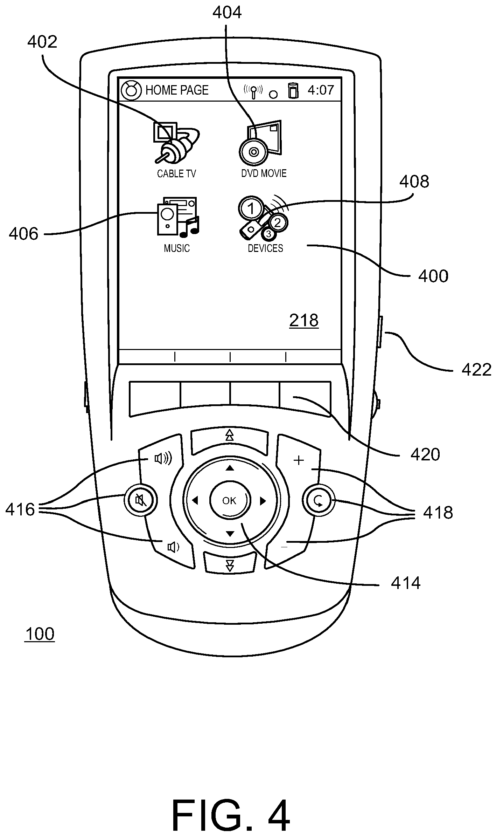

Certain aspects of the operation of exemplary controlling device 100 will now be discussed in conjunction with Figures 4 through 8. In this context, as will be appreciated by those familiar with the relevant art and/or with the previously referenced parent and U.S. provisional applications, the actual appearance and functionality of all the GUI pages in controlling device 100 represent only one instance of the output of editor application 300. It will thus be understood that the GUIs and associated functionality presented herein are by way of example only and not intended to be limiting in any way.

Controlling device 100 may include both a touch activated LCD screen 218 with soft keys (or other form of touch panel) and several groups of hard buttons 414, 416, 418, 420. The hard buttons groups might comprise, for example, a volume control group 416 (e.g., volume up, down, and mute), a channel changing group 418 (e.g., channel up, down, and return), a navigation group embodied in disk 414 (e.g., for menu navigation and selection including up, down, left, right, and enter/select), and/or a row of programmable keys 420 (e.g., keys for supporting macros or other to-be-configured functions).

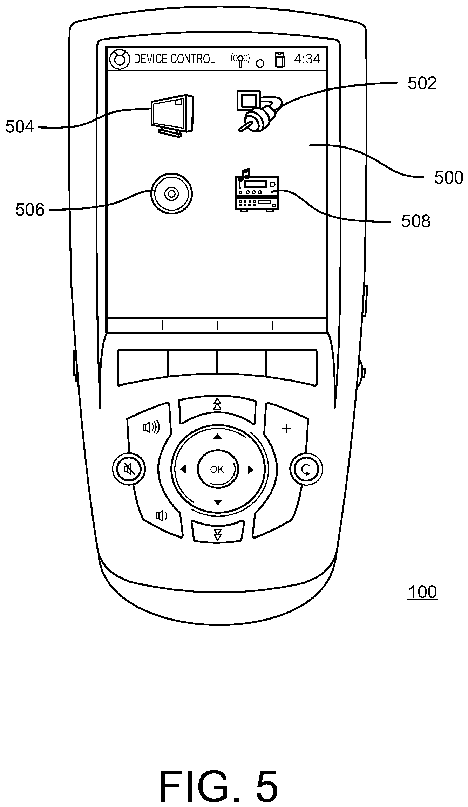

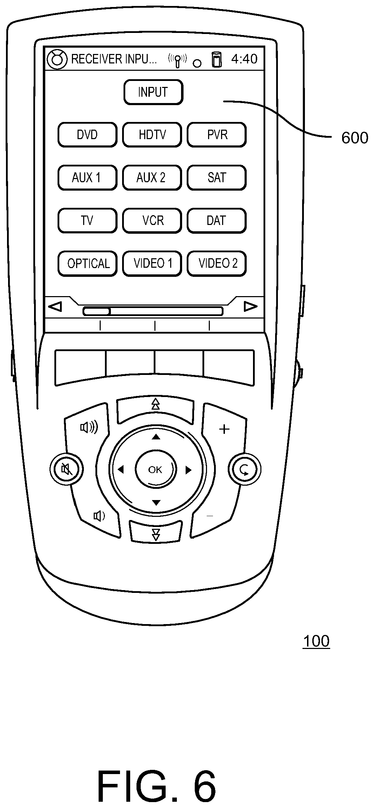

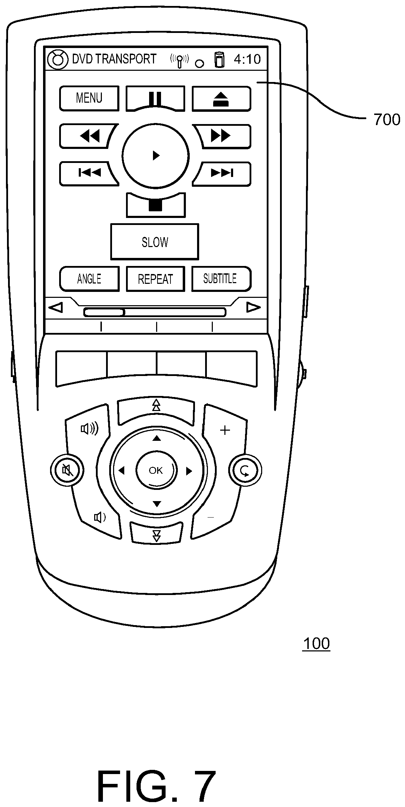

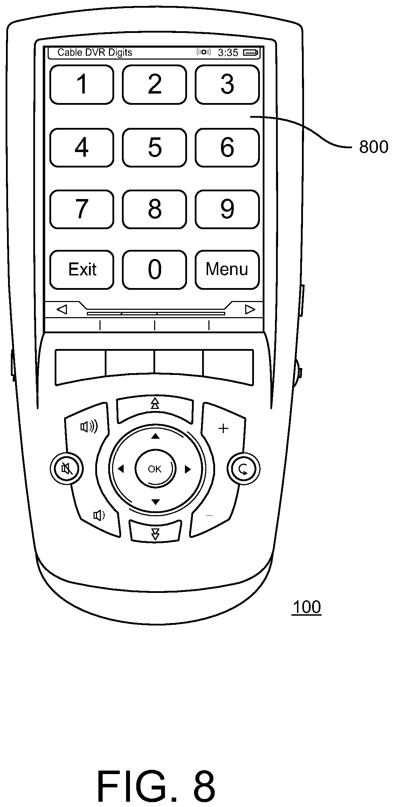

Upon start of operation, or any time the "Home" button 422 (e.g., a button located on the side of the device) is activated, an exemplary Home Page GUI 400 may be presented within the display. The illustrated, exemplary home Page 400 includes five touch-activated buttons. By way of example only, touching icon 402 may be used to initiate the activity of watching cable TV by causing controlling device 100 to transmit the commands required to power on cable STB 104, power on TV 102, select the TV input to which the cable STB is connected, and then cause the controlling device GUI to transition to a page (e.g., display having soft keys, an EPG, or the like) from which cable STB channel selection may be input (for further tuning, retrieving related content information, etc.). Touching icon 404 may be used to similarly cause the controlling device to place the entertainment system into a condition suitable for an activity such as watching a DVD movie, while touching icon 406 may be used to cause the controlling device to place the system into a condition for an activity such as listening to music. Touching icon 408 may be used to cause the controlling device to transition to another page 500 of the GUI (an example of which is shown in Fig. 5) from which individual appliance control pages may be called up, i.e., navigated to, using icons 502 (e.g., to navigate to a page having cable STB related control icons), 504 (e.g., to navigate to a page having TV related control icons), 506 (e.g., to navigate to a page having DVD player related control icons), and 508 (e.g., to navigate to a page having audio receiver related control icons). Examples of individual appliance control pages are shown in Figure 6 (GUI page 600 having soft keys for use in controlling receiver input selection commands), Figure 7 (GUI page 700 having soft keys for use in controlling DVD transport functions), and Figure 8 (GUI page 800 having soft keys for use in cable STB channel number entry).

In this way it will be understood and appreciated that a plurality of commands and/or actions may be performed both locally on controlling device 100 and remotely on the various appliances under the control of controlling device 100 in response to a single or multiple interaction(s) by a user with the key matrix 216 of controlling device 100.

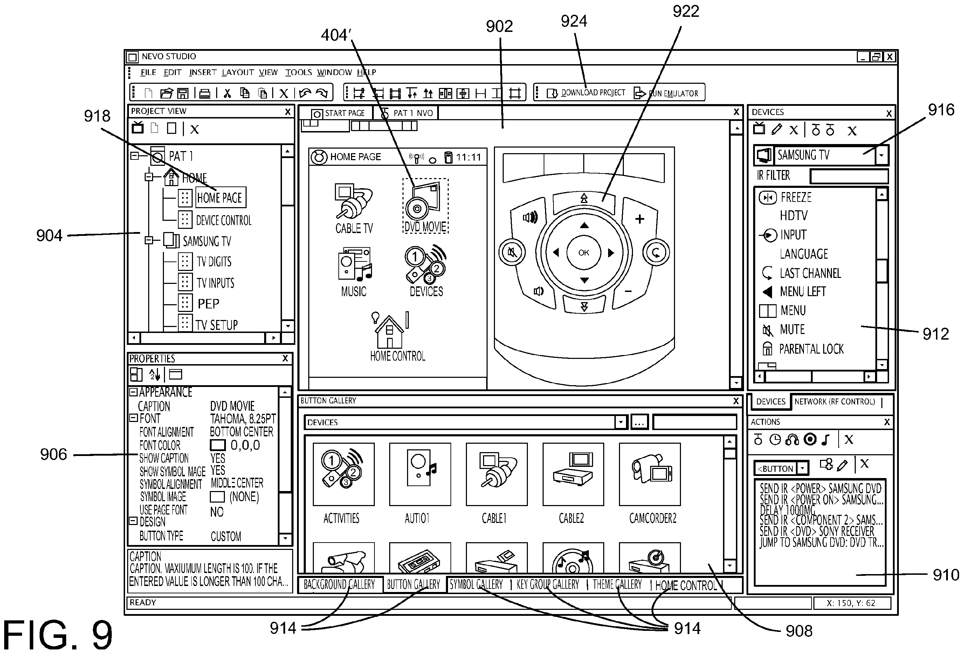

Turning now to Figure 9, the operation of an editing program 300 which may be used to create the above-disclosed, exemplary GUI pages and associated functionality will be described in further detail. For this purpose, the PC screen display of the editor application may be divided into several windows or panels, each having a specific purpose. By way of example, the panels may be as follows:
Main project panel 902, used to display the current GUI page being edited (Home Page 400 in this illustration) together with a representation 922, in this example, of the hard keys (keys 414 through 420) available on target controlling device 100;
Project View panel 904, used to display all currently defined GUI pages in a tree structure form (which may, as depicted in the exemplary embodiment shown, have collapse [-] and expand [+] functionality including selective expansion of individual nodes and/or a collapse all/expand all feature) where the GUI page to be edited may be selected (e.g., by clicking on a link) from within the tree structure list and wherein the GUI page being displayed in the Main project panel 902 may be indicated by a highlight 918 (the Home Page in the instant illustration);
Properties panel 906, used to display a list of (and allow editing of - for example by text entry, selection from drop down menus, etc.) the properties (such as the caption text and font attributes, symbol position, button type, etc.) associated with a presently selected GUI icon or hard key image within Main project panel 902 (GUI icon or soft key 404' with label "DVD Movie" in this illustration, as indicated by the highlight (dotted line) around icon 404' displayed in Main project panel 902);
Gallery panel 908, used to display graphic images which may be dragged and dropped onto the GUI pages being edited in window 902 wherein the Gallery choices may include sets of icons for use as buttons, page backgrounds, symbols for labeling buttons, key groups (to allow a group of related key icons, e.g. a numeric pad, to be dragged into place in a single operation), to allow pre-defined themes to be applied to single pages or groups of pages, or in an exemplary embodiment to allow home control interface items such as n-state widgets to be dragged and dropped onto GUI pages being edited, and wherein the Gallery in use (when multiple, organized Galleries are provided) is selected via tabs 914 according to the exemplary embodiment shown;
Actions panel 910, used to display a list of (and allow editing of - for example by dragging and dropping to change the order, by deleting selected items, etc.) the actions to be performed by controlling device 100 when the currently selected icon (in the Main panel 902) is activated by a user when the user interface is provided to the controlling device (e.g., in the example presented, it can be seen that activating the "DVD Movie" icon 404' will: (1) transmit a "Power On" command to DVD player 106, (2) transmit a "Power On" command to TV set 102, (3) wait one second for the devices to stabilize, then (4) transmit a "Component 2" input selection command to TV 102, (5) transmit "DVD" input selection command to Audio Receiver 108, and finally (6) jump to GUI page 700 corresponding to the DVD transport controls (illustrated in Fig. 7); and
Devices panel 912 which is preferably used to display a listing of all remote control commands available for each of the appliances setup to be controlled by controlling device 100 wherein the list of commandable functions for a given appliance to be displayed may be selected from a drop down list 916 (which in the illustrative example would comprise a TV 102, a cable STB 104, a DVD player 106, an audio receiver 108, a security camera 112, and a lamp dimmer 114) and wherein the commandable functions so displayed may be assigned to any icon displayed in main project panel 902 by simply clicking and dragging a commandable function icon to, for example, a desired location with a listing of functions displayed in the Actions panel 910 and/or over an icon displayed in the Main panel (where it would be added, for example, to the top or bottom of the listing of commands within the Action panel display).

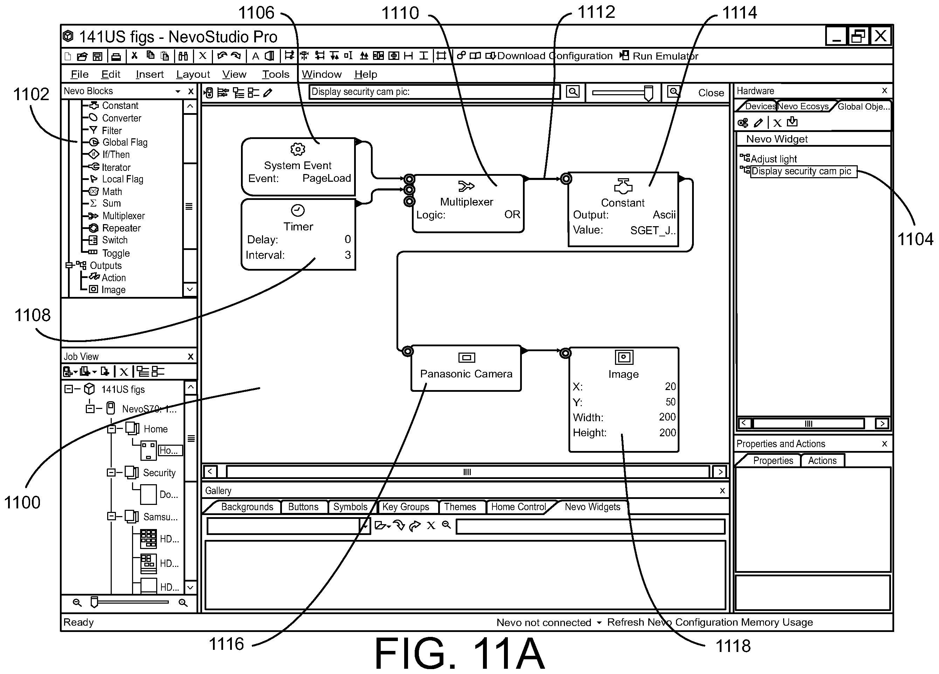

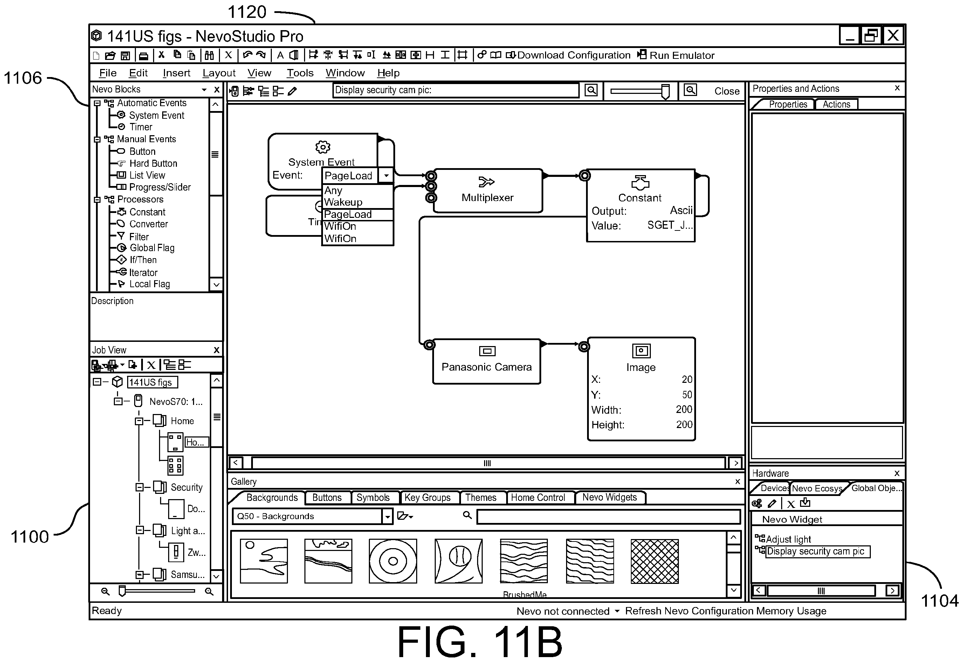

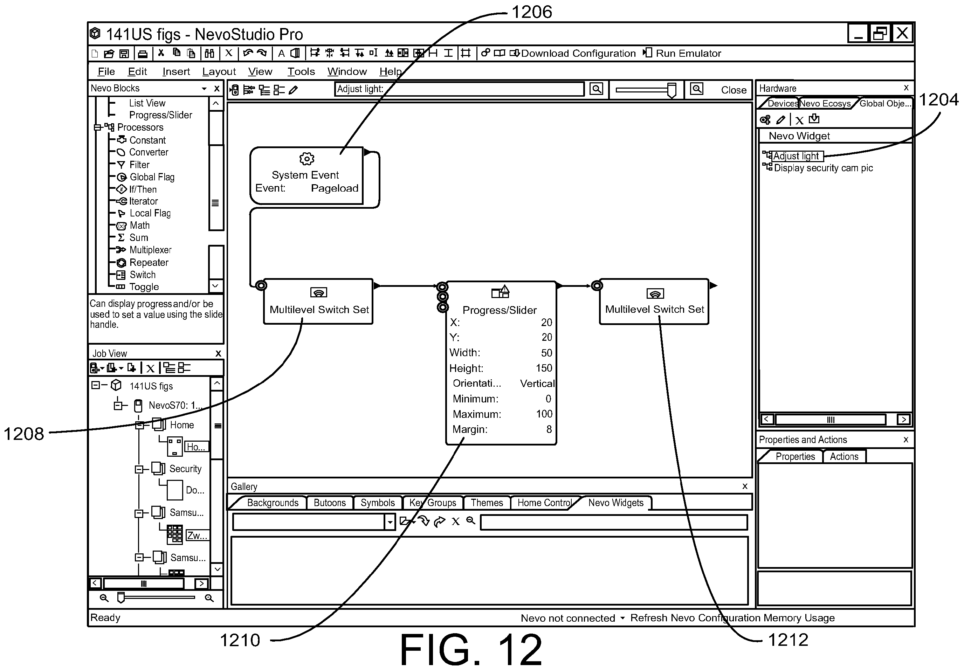

In certain embodiments, an exemplary editing program 300 may further support the configuration of reusable GUI elements which may incorporate all or some of information display, touch activatable control or input, data retrieval and/or manipulation, decision, issuance of commands to appliances, etc., such GUI elements hereafter referred to as "widgets." Advantageously, the creation of such widgets by a user of editing program 300 may be facilitated by the provision of various programming blocks, each representing a specific function (hereafter "blocks") which, in a widget definition mode of editor 300, may be dragged onto a graphic workspace and interconnected by mouse clicks in order to define the functionality of a widget. Illustrations of such a workspace and associated editing tools may be found in Figures 11a, 11b and 12. As illustrated, a listing of available functionalities may be presented in a blocks panel 1102 from which individual blocks may be dragged onto a work surface 1100,1200 and interconnected as necessary to define the series of steps and/or actions to be taken by a controlling device when executing a particular widget, for example a widget 1104 to display a security camera picture or a widget 1204 to adjust a lighting level.

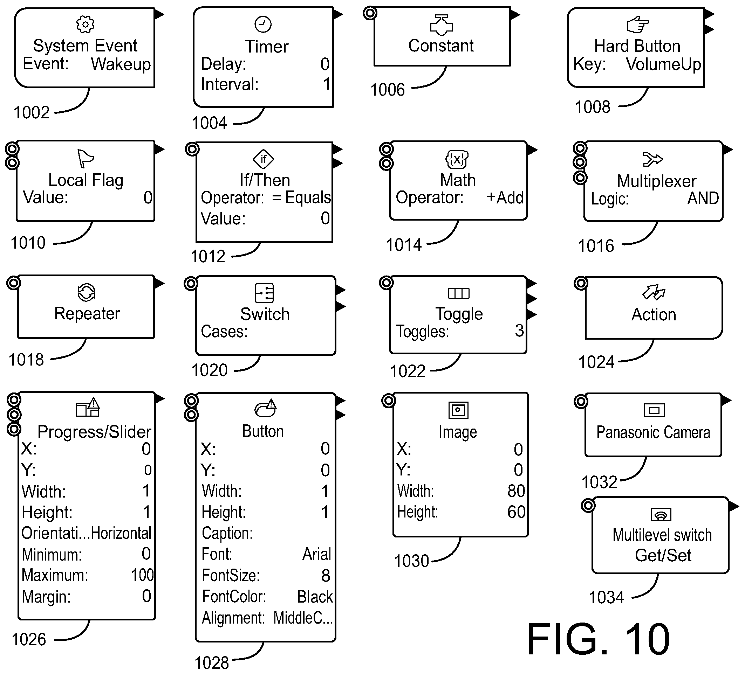

Each programming block may be graphically represented as a processing unit with input and output ports. Data may be transferred from block to block via these ports, i.e., according to the connections made from one block's output to the input of another block during widget definition. Turning for the moment to Figure 10, an exemplary group of such programming blocks may include, without limitation:

### System Event 1002.

Inputs: None. Outputs: Trigger value. Properties: A system event may comprise, for example, controller wakeup, page load, WiFi on, WiFi off, etc. A system event Block may be triggered when the specified event occurs and its output used to trigger other Blocks.

### Timer 1004:

Inputs: None. Outputs: Integer value. Properties: A timer Block may output a value after the specified delay, which output may be used to trigger other Blocks. Optionally, a timer Block may also be used to generate repetitive trigger outputs at a specified interval.

### Button 1028:

Inputs: A trigger value. Outputs: ButtonUp or ButtonDown (e.g., integer values "0" our "1"). Properties: Displays an activatable touch screen button. Programmed parameters may include an image and/or text caption for display, X-Y coordinates for placement on the touch screen, etc.

### Hard Button 1008:

Inputs: None Outputs: KeyUp or KeyDown (e.g., integer values "0" or "1"). Properties: Assigned to a physical hard key of the controlling device, for example by selection from a drop-down menu at programming time.

### Slider 1026:

Inputs: Current position, minimum, maximum. Outputs: New position input by user. Properties: Displays a slider bar on the controlling device touch screen and allows user input to adjust the current value.

### Constant 1006:

Inputs: Any trigger. Outputs: The value specified at programming time. Properties: Outputs a fixed value when triggered.

### Flag (Global or Local) 1010:

Inputs: Set value or get value. Outputs: Value established by the most recent set command. Properties: A global flag may be accessible from any programming in the controlling device, while a local flag may be accessed only from within the programming corresponding to the current page. Note: In the exemplary embodiment contemplated herein, as a general rule widget programming may not span pages, i.e., a widget is only active while the GUI page with which it has been associated is currently displayed by the controlling device. A global flag may thus be utilized for example to transfer a data value from a widget in one page to a widget in another page.

### If/Then 1012:

Inputs: Integer. Outputs: True or false. Properties: Logical comparison of the input to a preset value, according to one of the following operators: Equals, Not Equals, Greater, Greater or equals, Less, Less or equals.

### Math 1014:

Inputs: Two integer values. Output: Result value. Properties: Performs one of the following mathematical calculations: Add, Subtract, Multiply, Divide, Modulo.

### Multiplexer 1016:

Inputs: One or more. Outputs: One. Properties: Performs a logical AND or OR function. When defined as AND, all inputs must be present to produce an output. When defined as OR, any present input will produce an output.

### Repeater 1018:

Inputs: Integer value. Outputs: Successive triggers. Properties: The sequence of program blocks following this one will be repeated the number of times specified by the input value.

### Switch 1020:

Inputs: One value. Outputs: One of many. Properties: Programmed with a list of values. When an input is received, this is compared to the programmed list and the output corresponding to the matching value is triggered.

### Toggle/Stepper 1022:

Inputs: Trigger. Outputs: One of many. Properties: Each successive input cycles to the next output in sequence.

### Action 1024:

Inputs: Trigger. Outputs: None. Properties: This block executes any action(s) that have been assigned to it, for example transmission of an appliance control command, macro, page switch, etc.

### Image 1030:

Inputs: Any supported image file, for example .png, .bmp, .jpg, etc. Outputs: None. Properties: Displays an image on the touch screen, for example album art, camera image, etc. Programmed parameters may include X, Y coordinates and size.

### Serial, Z-Wave or IP Device 1032, 1034:

Inputs: Command string or integer. Outputs: Response from addressed appliance. Properties: Causes transmission of the input data to the specified target appliance selected from devices panel 912. The transmission medium, e.g., WiFi, Zwave, serial I/O, etc., to be used may be determined by the nature of the target appliance selected.

Returning now to Figure 11, a widget 1104 for displaying an image retrieved from security camera 112 may be created by dragging and connecting programming blocks as follows: Initiation of the widget may be defined by blocks 1106, 1108 and 1110. Whenever a page containing widget 1104 is loaded for display by controlling device 100 (resulting from inclusion of block 1106) and every three seconds thereafter for as long as that page continues to be active (resulting from the inclusion of block 1108) the logical "OR" function of block 1110 may issue a trigger 1112 to cause output of a predefined constant ACSII string by block 1114. This constant ASCII string may comprise an image retrieval command to be transmitted via WiFi link 120 to security camera 112 which has been associated with IP device block 1116. The output of IP device block 1116, that is the retrieved camera image (e.g., in the form of a JPEG file), is then passed to image display block 1118 for presentation on the screen of controlling device 100 with size and position as indicated. As will be appreciated, the individual options and parameters associated with each block may be defined for example via selection of item(s) from drop down menus and/or via use of data entry fields which may be initiated by double clicking each block or settable block parameter, for example as illustrated in the case of the establishing of the parameter for system event block 1106 by use of the drop down menu shown on page 1120 of Figure 11b.

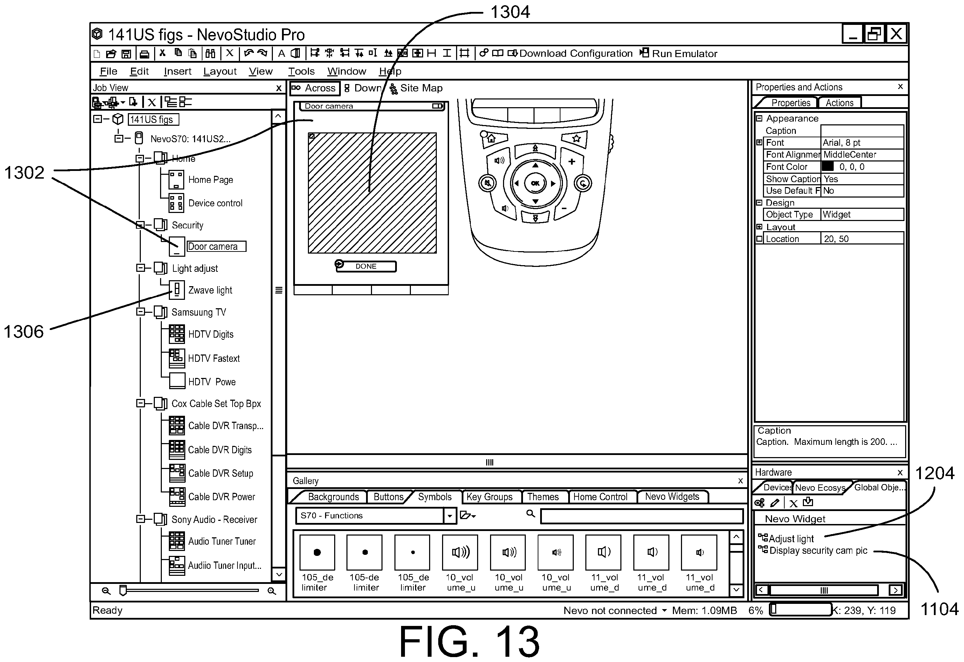

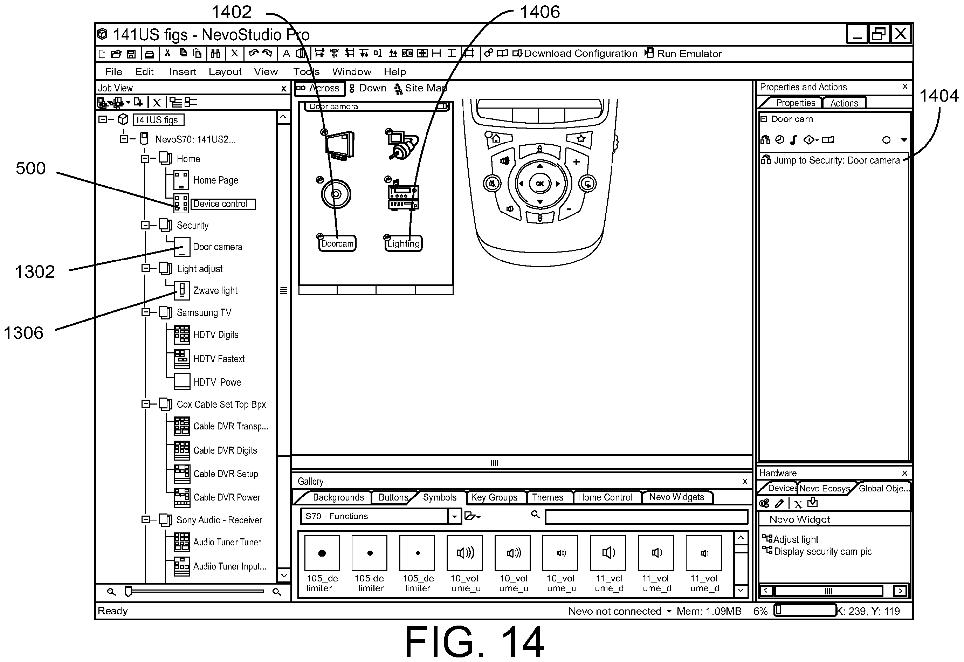

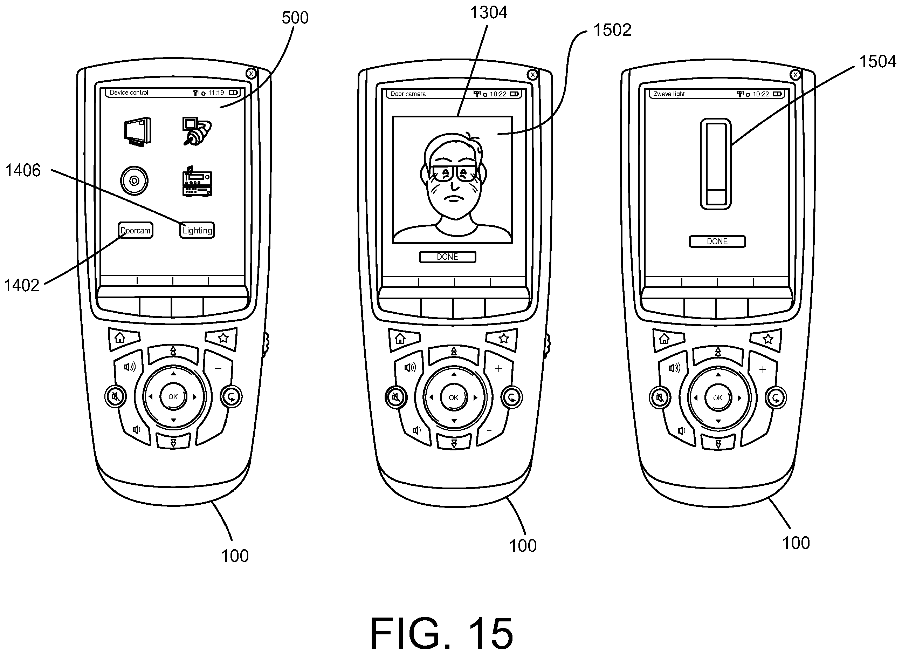

In this manner a widget may be defined which will automatically display a current security camera image whenever a controlling device page containing that widget is loaded. Turning now to Figure 13, once an exemplary security camera display widget 1104 has been defined it may then be available for use as an object in controlling device GUI pages. For example, a "door camera" page 1302 may be created and an instance of security camera widget 1104 dragged onto page 1302. The size and location of the display area 1304 within page 1302 may be as defined within programming block 1118 of Figure 11a. With reference to Figure 14, once door camera page 1304 has been defined in this manner, a button 1402 may be created on device control page 500 and assigned an action 1404 which may comprise jumping to the newly-created door camera page 1304. When downloaded and executed by an exemplary controlling device 100 as illustrated in Figure 15, the above described programming may enable a user (e.g., upon hearing a doorbell) to activate button 1402 and thereby cause retrieval and display 1304 of an image 1502 captured by security camera 112.

By way of further example, the programming of an exemplary lighting level control widget 1204 will now be discussed in conjunction with Figure 12. Once again, initiation of widget 1204 may occur upon loading of a page containing that widget, as illustrated by programming block 1206. This may be used to trigger the issuance of a "get current level" command by block 1208, e.g., to a Z-wave light controller device such as 114 of Figure 1. The resulting lighting level value may be passed to a progress/slider block 1210 to cause display of a slider bar at the designated touchscreen coordinates. If user touch input is received changing the position of the slider, the new value may comprise an output of block 1210 which in turn may become an input for a level setting command to be issued to device 114 by block 1212. If such a widget were assigned a GUI page 1306 and activation button 1406 in the manner previously described, download and execution by an exemplary controlling device 100 upon activation of button 1406 may result in a GUI display 1504 as illustrated in Figure 15.

While various concepts have been described in detail, it will be appreciated by those skilled in the art that various modifications and alternatives to those concepts could be developed in light of the overall teachings of the disclosure. For example, while the embodiments presented above are described in the context of universal remote controls (i.e., controlling devices capable of commanding the operation of multiple classes of appliances devices from multiple manufacturers) as being most broadly representative of controlling devices in general, it will be appreciated that the teachings of this disclosure may be equally well applied to other controlling devices of narrower capability, and also to any general or specific purpose device requiring a visual interface (i.e., display screens, signage devices, teleprompters, etc.) without departing from the scope of the present invention. Still further, it will be appreciated that the user interfaces described herein need not be limited to controlling devices but can be utilized in connection with any device having input elements wherein it is desired to convey information concerning such input elements. For example, the user interface may be utilized with devices such as calculators, phones, appliances, etc. having input elements having associated information conveying images in the form of alphanumeric and/or symbolic labels. It will also be understood that modification, editing, or updating of configuration settings may be performed either by a user or through any automated computing processes as are well known in the art. As such, the particular concepts disclosed are meant to be illustrative only and not limiting as to the scope of the invention which is to be given the full breadth of the appended claims and any equivalents thereof.

## Claims

1. A computer-readable media embodied on a physical, non-transient memory device having instructions for creating a user interface for provision to a hand-held device (100) adapted to control functional operations of one or more appliances (102, 104, 106, 108, 110, 112, 114), the instructions performing steps comprising:
receiving input to create a widget (1104) which is activatable via the user interface of the hand-held device (100) to cause the hand-held device (100) to perform at least one action wherein activation of the created widget will cause a transmission of a control command to one or more of the appliances in communication with the hand-held device, the widget (1104) comprising a plurality ofpre-defmed, user selected programming blocks (1106-1118) each graphically represented as a processing unit with at least one of an input and an output of which user selected ones of the inputs and outputs of the pre-defined, user selected programming blocks (1106-1118) are graphically interconnected via user interaction to define the at least one action to be performed upon activation of the widget (1104); and
receiving input to add the created widget (1104) to a user interface to be provided to the hand-held device (100).

2. The computer-readable media as recited in claim 1, wherein the input to create the widget (1104) further comprises input used to define one or parameters associated with one or more of the pre-defmed, user selected programming blocks (1106-1118).

3. The computer-readable media as recited in claim 1, wherein the widget (1104) is associated with a page of the user interface and wherein the widget is activated in response to a user selection made to cause a display of the page in a touch-screen display of the hand-held device (100).

4. The computer-readable media as recited in claim 1, wherein the widget (1104) is associated with a hard key of the hand-held device (100) and wherein the widget is activated in response to a user selection of the hard key.

5. The computer-readable media as recited in claim 1, wherein activation of the widget causes a retrieval of data from one or more appliances in communication with the hand-held device (100).

6. The computer-readable media as recited in claim 1, wherein the pre-defined, user selected programming blocks (1106-1118) are selected from a library (1102) of pre-defined programming blocks including one or more of a system event programming block (1106), a timer programming block (1108), a button programming block, a hard button programming block, a slider programming block, a constant programming block (1114), a flag programming block, an if/then programming block, a math programming block, a multiplexer programming block (1110), a repeater programming block, a switch programming block, a toggle programming block, an action programming block, an image programming block (1118), and an appliance response receiving programming block.

7. The computer-readable media as recited in claim 1, wherein the pre-defined, user selected programming blocks are selected from a library (1102) of pre-defmed programming blocks including logic performing blocks and input and/or output performing blocks.

8. A method for creating a user interface for provision to a hand-held device (100) adapted to control functional operations of one or more appliances (102, 104, 106, 108, 110, 112, 114), comprising:
creating at a development system a widget (1104) which is activatable via the user interface of the hand-held device (100) to cause the hand-held device (100) to perform at least one action wherein activation of the created widget will cause a transmission of a control command to one or more of the appliances in communication with the hand-held device, the created widget (1104) comprising a plurality of pre-defined, user selected programming blocks (1102) each graphically represented as a processing unit with at least one of an input and an output of which user selected ones of the inputs and outputs of the pre-defmed, user selected programming blocks (1106-1118) are graphically interconnected via user interaction to define the at least one action to be performed upon activation of the widget (1104);
adding the created widget to a user interface to be provided to the hand-held device (100); and
causing the user interface to be provided from the development system to the hand-held device (100).

9. The method as recited in claim 8, wherein creating the widget (1104) further comprises defining one or parameters associated with one or more of the pre-defmed, user selected programming blocks (1106-1118).

10. The method as recited in claim 8, comprising associating the widget (1102) with a page of the user interface whereby the widget will be activated in response to a user selection made to cause a display of the page in a touch-screen display of the hand-held device (100).

11. The method as recited in claim 8, comprising associating the widget with a hard key of the hand-held device (100) whereby the widget will be activated in response to a user selection of the hard key.

12. The method as recited in claim 8, wherein activation of the created widget will cause a retrieval of data from one or more appliances in communication with the hand-held device (100).

13. The method as recited in claim 8, wherein the pre-defmed, user selected programming blocks (1106-1118) are selected during the step of creating the widget (1104) from a library (1102) of pre-defmed programming blocks including one or more of a system event programming block (1106), a timer programming block (1108), a button programming block, a hard button programming block, a slider programming block, a constant programming block (1114), a flag programming block, an if/then programming block, a math programming block, a multiplexer programming block (1110), a repeater programming block, a switch programming block, a toggle programming block, an action programming block, an image programming block (1118), and an appliance response receiving programming block.

14. The method as recited in claim 8, wherein the pre-defmed, user selected programming blocks (1106-1118) are selected during the step of creating the widget (1104) from a library (1102) of pre-defmed programming blocks including logic performing blocks and input and/or output performing blocks.

## Patentansprüche

1. Computerlesbares Medium, das in einer physischen, nichtflüchtigen Speichereinrichtung verkörpert ist, die Anweisungen zum Erzeugen einer Benutzerschnittstelle zum Bereitstellen an eine tragbare Einrichtung (100) aufweist, angepasst, um funktionale Vorgänge von einem oder mehreren Geräten (102, 104, 106, 108, 110, 112, 114) zu steuern, wobei die Anweisungen Schritte ausführen, die umfassen:
- Empfangen einer Eingabe, um ein Widget (1104) zu erzeugen, das über die Benutzerschnittstelle der tragbaren Einrichtung (100) aktivierbar ist, um die tragbare Einrichtung (100) dazu zu veranlassen, mindestens einen Vorgang durchzuführen, wobei eine Aktivierung des erzeugten Widgets eine Übertragung eines Steuerungsbefehls an eines oder mehrere der Geräte in Kommunikation mit der tragbaren Einrichtung veranlassen wird, wobei das Widget (1104) eine Mehrzahl von vordefinierten, benutzerausgewählten Programmierblöcken (1106-1118) umfasst, die jeweils graphisch als eine Verarbeitungseinheit mit mindestens einer von einer Eingabe und einer Ausgabe dargestellt sind, von denen benutzerausgewählte Eingaben und Ausgaben der vordefinierten, benutzerausgewählten Programmierblöcke (1106-1118) graphisch über eine Benutzerinteraktion verbunden sind, um den mindestens einen Vorgang zu definieren, der auf eine Aktivierung des Widgets (1104) hin ausgeführt werden soll; und
- Empfangen einer Eingabe, um das erzeugte Widget (1104) einer Benutzerschnittstelle hinzuzufügen, die an die tragbare Einrichtung (100) bereitgestellt werden soll.

2. Computerlesbares Medium nach Anspruch 1, wobei die Eingabe zum Erzeugen des Widgets (1104) ferner eine Eingabe umfasst, die verwendet wird, um einen oder mehrere Parameter zu definieren, der bzw. die mit einem oder mehreren der vordefinierten, benutzerausgewählten Programmierblöcke (1106-1118) zusammenhängen.

3. Computerlesbares Medium nach Anspruch 1, wobei das Widget (1104) mit einer Seite der Benutzerschnittstelle zusammenhängt, und wobei das Widget in Antwort auf eine Benutzerauswahl aktiviert wird, die gemacht wurde, um eine Anzeige der Seite in einer berührungsempfindlichen Anzeige der tragbaren Einrichtung (100) zu veranlassen.

4. Computerlesbares Medium nach Anspruch 1, wobei das Widget (1104) mit einem harten Schlüssel der tragbaren Einrichtung (100) zusammenhängt, und wobei das Widget in Antwort auf eine Benutzerauswahl des harten Schlüssels aktiviert wird.

5. Computerlesbares Medium nach Anspruch 1, wobei eine Aktivierung des Widgets ein Abrufen von Daten aus einem oder mehreren Geräten in Kommunikation mit der tragbaren Einrichtung (100) veranlasst.

6. Computerlesbares Medium nach Anspruch 1, wobei die vordefinierten, benutzerausgewählten Programmierblöcke (1106-1118) aus einer Bibliothek (1102) vordefinierter Programmierblöcke ausgewählt sind, die einen oder mehrere der folgenden umfassen: einen Systemereignis-Programmierblock (1106), einen Zeitgeber-Programmierblock (1108), einen Knopf-Programmierblock, einen Harter-Knopf-Programmierblock, einen Gleiter-Programmierblock, einen Konstante-Programmierblock (1114), einen Kennzeichnungs-Programmierblock, einen Wenn-/Dann-Programmierblock, einen Mathematik-Programmierblock, einen Multiplexer-Programmierblock (1110), einen Repeater-Programmierblock, einen Schalter-Programmierblock, einen Umschalter-Programmierblock, einen Vorgangs-Programmierblock, einen Bild-Programmierblock (1118) und einen Geräteantwort-Empfangs-Programmierblock.

7. Computerlesbares Medium nach Anspruch 1, wobei die vordefinierten, benutzerausgewählten Programmierblöcke aus einer Bibliothek (1102) von vordefinierten Programmierblöcken inklusive Logik-Ausführungsblöcken und Eingabe- und/oder Ausgabe-Ausführungsblöcken ausgewählt sind.

8. Verfahren zum Erzeugen einer Benutzerschnittstelle zum Bereitstellen an eine tragbare Einrichtung (100), die dazu angepasst ist, funktionale Vorgänge von einem oder mehreren Geräten (102, 104, 106, 108, 110, 112, 114) zu steuern, umfassend:
- Erzeugen, an einem Entwicklungssystem, eines Widgets (1104), das über die Benutzerschnittstelle der tragbaren Einrichtung (100) aktivierbar ist, um die tragbare Einrichtung (100) dazu zu veranlassen, mindestens einen Vorgang durchzuführen, wobei eine Aktivierung des erzeugten Widgets eine Übertragung eines Steuerungsbefehls an eines oder mehrere der Geräte in Kommunikation mit der tragbaren Einrichtung veranlassen wird, wobei das Widget (1104) eine Mehrzahl von vordefinierten, benutzerausgewählten Programmierblöcken (1102) umfasst, die jeweils graphisch als eine Verarbeitungseinheit mit mindestens einer von einer Eingabe und einer Ausgabe dargestellt sind, von denen benutzerausgewählte Eingaben und Ausgaben der vordefinierten, benutzerausgewählten Programmierblöcke (1106-1118) graphisch über eine Benutzerinteraktion verbunden sind, um den mindestens einen Vorgang zu definieren, der auf eine Aktivierung des Widgets (1104) hin ausgeführt werden soll;
- Hinzufügen des erzeugen Widgets zu einer Benutzerschnittstelle, die an die tragbare Einrichtung (100) bereitgestellt werden soll; und
- Veranlassen, dass die bereitzustellende Benutzerschnittstelle vom Entwicklungssystem an die tragbare Einrichtung (100) bereitgestellt wird.

9. Verfahren nach Anspruch 8, wobei Erzeugen des Widgets (1104) ferner ein Definieren von einem oder mehreren Parametern umfasst, die mit einem oder mehreren der vordefinierten, benutzerausgewählten Programmierblöcke (1106-1118) zusammenhängen.

10. Verfahren nach Anspruch 8, umfassend ein Zuordnen des Widgets (1102) zu einer Seite der Benutzerschnittstelle, wodurch das Widget in Antwort auf eine Benutzerauswahl aktiviert werden wird, die gemacht wurde, um eine Anzeige der Seite in einer berührungsempfindlichen Anzeige der tragbaren Einrichtung (100) zu veranlassen.

11. Verfahren nach Anspruch 8, umfassend ein Zuordnen des Widgets zu einem harten Schlüssel der tragbaren Einrichtung (100), wodurch das Widget in Antwort auf eine Benutzerauswahl des harten Schlüssels aktiviert werden wird.

12. Verfahren nach Anspruch 8, wobei eine Aktivierung des erzeugten Widgets ein Abrufen von Daten aus einem oder mehreren Geräten in Kommunikation mit der tragbaren Einrichtung (100) veranlassen wird.

13. Verfahren nach Anspruch 8, wobei die vordefinierten, benutzerausgewählten Programmierblöcke (1106-1118) während des Schrittes des Erzeugens des Widgets (1104) aus einer Bibliothek (1102) vordefinierter Programmierblöcke ausgewählt werden, die einen oder mehrere der folgenden umfassen: einen Systemereignis-Programmierblock (1106), einen Zeitgeber-Programmierblock (1108), einen Knopf-Programmierblock, einen Harter-Knopf-Programmierblock, einen Gleiter-Programmierblock, einen Konstante-Programmierblock (1114), einen Kennzeichnungs-Programmierblock, einen Wenn-/Dann-Programmierblock, einen Mathematik-Programmierblock, einen Multiplexer-Programmierblock (1110), einen Repeater-Programmierblock, einen Schalter-Programmierblock, einen Umschalter-Programmierblock, einen Vorgangs-Programmierblock, einen Bild-Programmierblock (1118) und einen Geräteantwort-Empfangs-Programmierblock.

14. Verfahren nach Anspruch 8, wobei die vordefinierten, benutzerausgewählten Programmierblöcke (1106-1118) während des Schrittes des Erzeugens des Widgets (1104) aus einer Bibliothek (1102) vordefinierter Programmierblöcke ausgewählt werden, die Logik-Ausführungsblöcke und Eingabe- und/oder Ausgabe-Ausführungsblöcke umfassen.

## Revendications

1. Support lisible par ordinateur incorporé sur un dispositif de mémoire physique, non transitoire présentant des instructions de création d'une interface utilisateur pour fourniture à un dispositif portatif (100) adapté pour contrôler des opérations fonctionnelles d'un ou plusieurs appareils (102, 104, 106, 108, 110, 112, 114), les instructions exécutant des étapes comprenant :
recevoir une entrée pour créer un widget (1104) qui est activable via l'interface utilisateur du dispositif portatif (100) pour amener le dispositif portatif (100) à effectuer au moins une action dans laquelle l'activation du widget créé entrainera une transmission d'une commande de contrôle à un ou plusieurs des appareils en communication avec le dispositif portatif, le widget (1104) comprenant une pluralité de blocs de programmation prédéfinis, sélectionnés par un utilisateur (1106-1118) représentés chacun graphiquement sous la forme d'une unité de traitement avec au moins une d'une entrée et d'une sortie dont les entrées et sorties sélectionnées par un utilisateur des blocs de programmation prédéfinis, sélectionnés par un utilisateur (1106-1118) sont interconnectées graphiquement via une interaction utilisateur pour définir l'au moins une action à effectuer lors de l'activation du widget (1104) ; et
recevoir une entrée pour ajouter le widget créé (1104) à une interface utilisateur à fournir au dispositif portatif (100).

2. Support lisible par ordinateur selon la revendication 1, dans lequel l'entrée pour créer le widget (1104) comprend en outre une entrée utilisée pour définir un ou paramètres associés à un ou plusieurs des blocs de programmation prédéfinis, sélectionnés par un utilisateur (1106-1118).

3. Support lisible par ordinateur selon la revendication 1, dans lequel le widget (1104) est associé à une page de l'interface utilisateur et dans lequel le widget est activé en réponse à une sélection d'un utilisateur effectuée pour provoquer un affichage de la page dans un écran tactile du dispositif portatif (100).

4. Support lisible par ordinateur selon la revendication 1, dans lequel le widget (1104) est associé à une touche matérielle du dispositif portatif (100) et dans lequel le widget est activé en réponse à une sélection d'un utilisateur de la touche matérielle.

5. Support lisible par ordinateur selon la revendication 1, dans lequel l'activation du widget entraine une récupération de données à partir d'un ou plusieurs appareils en communication avec le dispositif portatif (100).

6. Support lisible par ordinateur selon la revendication 1, dans lequel les blocs de programmation prédéfinis, sélectionnés par un utilisateur (1106-1118) sont sélectionnés à partir d'une librairie (1102) de blocs de programmation prédéfinis incluant un ou plusieurs blocs parmi un bloc de programmation d'événements système (1106), un bloc de programmation de base de temps (1108), un bloc de programmation de bouton, un bloc de programmation de bouton matériel, un bloc de programmation de curseur, un bloc de programmation de constante (1114), un bloc de programmation de drapeau, un bloc de programmation si/alors, un bloc de programmation mathématique, un bloc de programmation de multiplexeur (1110), un bloc de programmation de répéteur, un bloc de programmation d'aiguillage, un bloc de programmation de bascule, un bloc de programmation d'action, un bloc de programmation d'image (1118), et un bloc de programmation de réception de réponse d'appareil.

7. Support lisible par ordinateur selon la revendication 1, dans lequel les blocs de programmation prédéfinis, sélectionnés par un utilisateur sont sélectionnés à partir d'une librairie (1102) de blocs de programmation prédéfinis incluant des blocs d'exécution de logique et des blocs d'exécution d'entrées et/ou de sorties.

8. Procédé de création d'une interface utilisateur pour fourniture à un dispositif portatif (100) adapté pour contrôler des opérations fonctionnelles d'un ou plusieurs appareils (102, 104, 106, 108, 110, 112, 114), comprenant :
créer au niveau d'un système de développement un widget (1104) qui est activable via l'interface utilisateur du dispositif portatif (100) pour amener le dispositif portatif (100) à effectuer au moins une action dans laquelle l'activation du widget créé entrainera une transmission d'une commande de contrôle à un ou plusieurs des appareils en communication avec le dispositif portatif, le widget créé (1104) comprenant une pluralité de blocs de programmation prédéfinis, sélectionnés par un utilisateur (1102) représentés chacun graphiquement sous la forme d'une unité de traitement avec au moins une d'une entrée et d'une sortie dont les entrées et sorties sélectionnées par un utilisateur des blocs de programmation prédéfinis, sélectionnés par un utilisateur (1106-1118) sont interconnectées graphiquement via une interaction utilisateur pour définir l'au moins une action à effectuer lors de l'activation du widget (1104) ;
ajouter le widget créé à une interface utilisateur à fournir au dispositif portatif (100) ; et
provoquer la fourniture de l'interface utilisateur depuis le système de développement au dispositif portatif (100).

9. Procédé selon la revendication 8, dans lequel créer le widget (1104) comprend en outre définir un ou paramètres associés à un ou plusieurs des blocs de programmation prédéfinis, sélectionnés par un utilisateur (1106-1118).

10. Procédé selon la revendication 8, comprenant associer le widget (1102) à une page de l'interface utilisateur par laquelle le widget sera activé en réponse à une sélection d'un utilisateur effectuée pour provoquer un affichage de la page dans un écran tactile du dispositif portatif (100).

11. Procédé selon la revendication 8, comprenant associer le widget à une touche matérielle du dispositif portatif (100) par laquelle le widget sera activé en réponse à une sélection d'un utilisateur de la touche matérielle.

12. Procédé selon la revendication 8, dans lequel l'activation du widget créé entrainera une récupération de données à partir d'un ou plusieurs appareils en communication avec le dispositif portatif (100).

13. Procédé selon la revendication 8, dans lequel les blocs de programmation prédéfinis, sélectionnés par un utilisateur (1106-1118) sont sélectionnés pendant l'étape de création du widget (1104) à partir d'une librairie (1102) de blocs de programmation prédéfinis incluant un ou plusieurs blocs parmi un bloc de programmation d'événements système (1106), un bloc de programmation de base de temps (1108), un bloc de programmation de bouton, un bloc de programmation de bouton matériel, un bloc de programmation de curseur, un bloc de programmation de constante (1114), un bloc de programmation de drapeau, un bloc de programmation si/alors, un bloc de programmation mathématique, un bloc de programmation de multiplexeur (1110), un bloc de programmation de répéteur, un bloc de programmation d'aiguillage, un bloc de programmation de bascule, un bloc de programmation d'action, un bloc de programmation d'image (1118), et un bloc de programmation de réception de réponse d'appareil.

14. Procédé selon la revendication 8, dans lequel les blocs de programmation prédéfinis, sélectionnés par un utilisateur (1106-1118) sont sélectionnés pendant l'étape de création du widget (1104) à partir d'une librairie (1102) de blocs de programmation prédéfinis incluant des blocs d'exécution de logique et des blocs d'exécution d'entrées et/ou de sorties.
